# EUROPÄISCHE PATENTSCHRIFT

(11) **EP 1 299 781 B1**
(45) Veröffentlichungstag und Bekanntmachung des Hinweises auf die Patenterteilung: **05.10.2005**
(21) Anmeldenummer: 01947125.9
(22) Anmeldetag: 22.05.2001
(51) Int. Cl.: G05B 19/25

(54) **STELLANTRIEB MIT ELEKTROMOTOR**
ACTUATOR WITH AN ELECTRIC MOTOR
ACTIONNEUR A MOTEUR ELECTRIQUE

(30) Priorität: 30.06.2000 DE 10031920
(43) Veröffentlichungstag der Anmeldung: 09.04.2003
(73) Patentinhaber: ROBERT BOSCH GMBH, 70442 Stuttgart (DE)
(72) Erfinder: SCHUMACHER, Axel, 77815 Bühl (DE)
(86) Internationale Anmeldenummer: PCT/DE2001/001605
(87) Internationale Veröffentlichungsnummer: WO 2002/003154

(56) Entgegenhaltungen:
- DE-A- 4 031 816
- DE-A- 4 314 211
- DE-A- 19 503 492
- DE-A- 19 840 572

## Beschreibung

Die Erfindung betrifft einen Stellantrieb mit einem mit positionsabhängigem Summenmoment arbeitenden, elektronisch kommutierten Elektromotor, der mittels eines Momenten-Reglers und einer Regelstrecke nach einer sich kontinuierlich ansteigenden Moment-Zeit-Kennlinie auf einen vorgebbaren drehmomentabhängigen Sollwert einregelbar ist, wobei dem Momenten-Regler zur Ableitung eines Regelsignals neben dem Sollwert ein drehmomentabhängiger Istwert des Elektromotors zuführbar ist.

Bei Elektromotoren mit positionsabhängigem Motordrehmoment ist gerade im Überlappungsbereich der Phasen eine Absenkung des Summendrehmomentes gegeben, die ab einem bestimmten Drehmomentenniveau durch Erhöhung des Phasenstromes nicht mehr kompensiert werden kann, wenn der Elektromotor als geschalteter Reluktanzmotor ausgelegt ist. Bei anderen Motortopologien zeigt die Motordrehmoment-Positions-Kennlinie abwechselnd Minima und Maxima, wobei die Maxima an den Positionen auftreten, bei denen jeweils nur eine Phase des Elektromotors bestromt wird.

Die Minima liegen in den Überlappungsbereichen zweier nacheinander bestromter Phasen, wobei beide Phasen bestromt werden, über die Phasen jedoch Motordrehmomente erzeugt werden, deren Summe kleiner ist als das von einer Phase erzeugte maximale Motordrehmoment.

Wird die Position des Motorrotors langsam und kontinuierlich verändert, dann kann in der eingeregelten Endposition die Halteposition mit einem Minima der Motordrehmoment-Positions-Kennlinie zusammenfallen. Der Anlauf des Elektromotors aus dieser Position eines Minimums kann bei hohem Lastmoment und großer Haftreibung nicht mehr sicher erfolgen.

Bei großem Sollmoment und langsamer Veränderung des Momentes während des Stellvorganges besteht zudem die Gefahr, dass beim Durchfahren eines Minimums des Summenmomentes aufgrund des Lastmomentes und der Reibung der Elektromotor stehenbleibt.

Es ist Aufgabe der Erfindung, bei einem Stellantrieb mit Elektromotor der eingangs erwähnten Art sicherzustellen, dass stets eine Endposition erreicht wird, die ein sicheres Anlaufen des Stellantriebes bei erneuter Ansteuerung auch bei hohem Lastmoment und großer Haftreibung gewährleistet ist.

Diese Aufgabe wird nach der Erfindung dadurch gelöst, dass der Momenten-Regler das Regelsignal als Sollposition abgibt und einem nachgeordneten Positions-Regler zuführt, dass bis zum Erreichen eines vorgegebenen Schwellwert-Momentes, das kleiner als das Maximalmoment des Elektromotors, die Sollposition dem Positions-Regler unverändert zuführbar und mit der Istposition des Elektromotors zur Ableitung des Regelsignals für die Regelstrecke verwendet ist, und dass nach dem Überschreiten des Schwellwert-Momentes die Sollposition dem Positions-Regier als geänderte Sollposition bis zum Erreichen der vorgegebenen Sollposition zuführbar ist, wobei sich die geänderte Sollposition entsprechend dem Anstieg der nachfolgenden Spitzenwerte des zunehmenden Summenmomentes mehrmals sprungartig erhöht.

Mit der zusätzlichen Positionsregelung wird erreicht, dass der Elektromotor stets in eine Endposition gebracht wird, die im Bereich eines Maximums der Moment-Positions-Kennlinie liegt und so bei einer folgenden Wiedereinschaltung auch mit annähernd maximalem Motordrehmoment gestartet wird. Hohes Lastmoment und große Haftreibung wird daher sicher überwunden und ein eindeutiger Anlauf des Elektromotors sichergestellt.

Durch die sprungartigen Änderungen der geänderten Sollposition wird zudem erreicht, dass ab dem vorgegebenen Schwellwert-Moment bei zunehmendem Sollwert die Minima des Summenmomentes schnell und sicher durchfahren werden und die nächste Position des folgenden Maximums eingeregelt wird, bis schließlich die dem Sollwert entsprechende Endposition erreicht ist.

Eine typische Anwendung des Stellantriebes ist bei einer elektromoto risch betätigten Bremse eines Kraftfahrzeuges gegeben. Der Elektromotor wird dabei aus einem Betriebspunkt gestartet, der ein hohes Moment erbringt und die Bremskraft langsam weiter erhöht wird. Der Elektromotor, der die Bremszange verstellt, muss dabei gegen das bereits hohe Rückstellmoment der Bremse diese langsam weiter zudrücken. Mit der Regelung gemäß der Erfindung lässt sich die Endkraft um ca. 8 % erhöhen und gleichzeitig die Stromaufnahme aus dem Bordnetz des Kraftfahrzeuges um etwa ein Drittel verringern.

Nach einer Ausgestaltung ist das Schwellwert-Moment mit etwa 70 % des Maximalmomentes des Elektromotors gewählt.

Der weitere Anstieg der geänderten Sollposition nach dem Überschreiten des Schwellwert-Momentes ist dabei so ausgelegt, dass sich nach jeder sprungartigen Erhöhung der geänderten Sollposition ihr Wert bis zum Erreichen der dem nachfolgenden Maximum des Summenmomentes zugeordneten unveränderten Sollposition konstant bleibt und sich dann wieder sprungartig ändert.

Die geänderte Sollposition ist daher eine Funktion des Positionssignals des Momenten-Reglers, des vorgegebenen Schwellwert-Momentes und des drehmomentabhängigen Sollwertes.

Der Regelkreis ist nach einer vorteilhaften Weise so aufgebaut, dass zwischen den Momenten-Regler und den Positions-Regler eine Rechnerschaltung eingefügt ist, der das Regelsignal des Momenten-Reglers als Sollposition und der Sollwert zuführbar sind und dass die Rechnerschaltung in Abhängigkeit von der Sollposition und dem Sollwert unter Berücksichtigung des Schwellwert-Momentes die Sollposition in die geänderte Sollposition umrechnet und dem Positions-Regler zuführt.

Die Erfindung wird anhand eines anhand der Zeichnungen schematisch dargestellten Ausführungsbeispiels näher erläutert. Es zeigen:
- Fig. 1: das Summenmoment eines dreiphasigen, vierpoligen Elektromotors in Abhängigkeit vom Rotorwinkel bei konstantem Strom,
- Fig. 2: die Moment-Zeit-Kennlinie des Elektromotors,
- Fig. 3: die zugeordnete Sollposition als Regelsignal des Momenten-Reglers in Abhängigkeit von der Zeit,
- Fig. 4: das durch eine Rechnerschaltung zeit- und momentabhängig geänderte dem Positions-Rechner zugeführte Sollposition und
- Fig. 5: den Regelkreis des Elektromotors mit Momenten-Regler, Rechnerschaltung, Positions-Regler und Regelstrecke.

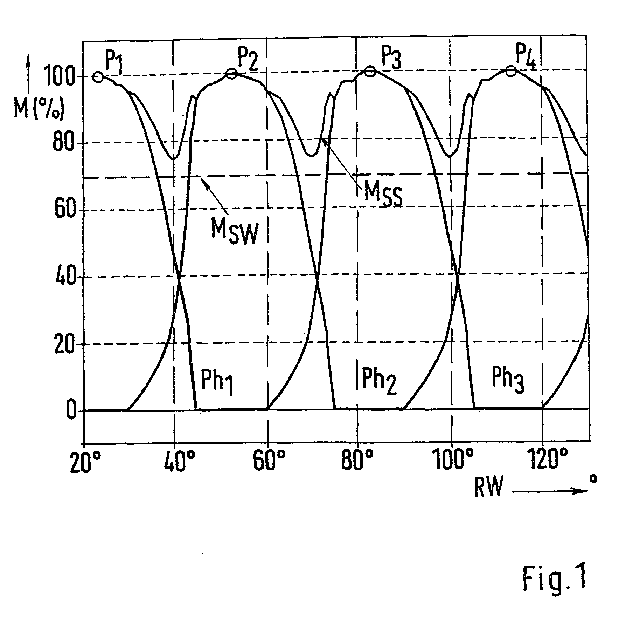

Die Fig. 1 zeigt eine stellungsabhängige Moment-Positions-Kennlinie eines geschalteten Reluktanzmotors mit 4 Rotorpolen und 3 Phasen. Bei der Motortopologie zeigt das Summenmoment Mₛₛ in den Überlappungsbereichen zwischen benachbarten Phasen Ph₁ und Ph₂, Ph₃ und Ph₄ usw. deutliche Absenkungen, d.h. Minima, die ab einem bestimmten Moment durch Erhöhung des Phasenstromes nicht mehr kompensiert weren können. Bei anderen Motortopologien, z.B. 6 Rotorpole und 4 Phasen, zeigt das Summenmoment im Bereich der Überlappung zweier Phasen Maxima und Minima dort, wo nur eine Phase bestromt wird. Es handelt sich in jedem Fall um einen Elektromotor, der mit positionsabhängigem Summenmoment arbeitet.

Bei dem gewählten Ausführungsbeispiel liegen die Maxima des Summenmomentes Mₛₛ in den Positionen P₁ bis P₄, in denen nur eine Phase Ph₁, Ph₂ oder Ph₃ bestromt wird. Zwischen diesen Maxima liegen Minima, wie die Moment-Positions-Kennlinie nach Fig. 1 zeigt. Das eingezeichnete Schwellwert-Moment M_{SW} wird mit etwa 70 % des maximalen Spitzenmoments M 100 % gewählt.

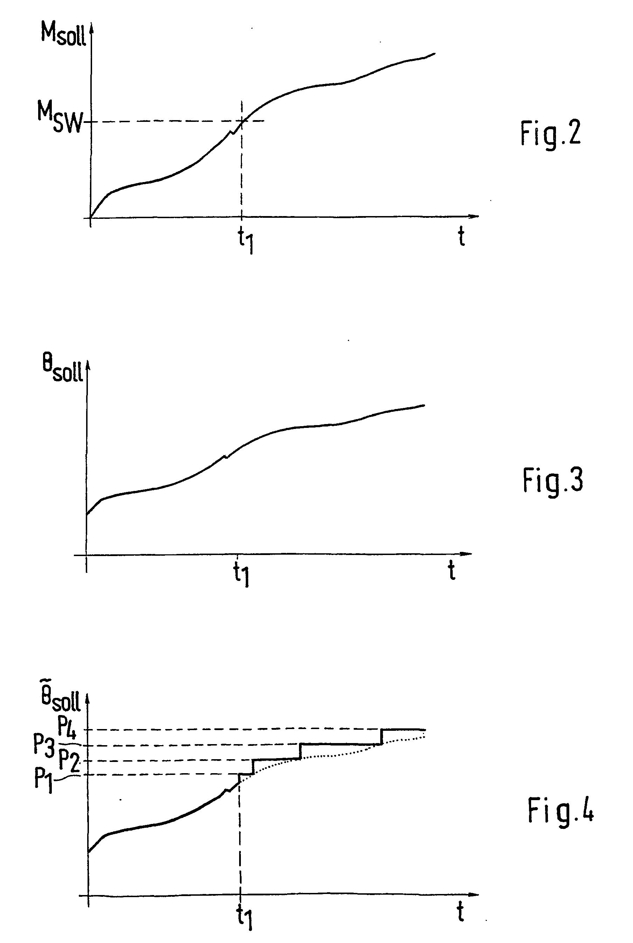

Wie Fig. 2 zeigt, ist dem Sollwert Mₛₒₗₗ eine kontinuierlich zunehmende Sollwert-Zeit-Kennlinie zugeordnet, die den Zeitablauf bei einer Stellbewegung des Stellantriebes, d.h. des Anlaufes des Elektromotors wiedergibt. Dabei wird nach einer Zeit t'₁ das vorgegebene Schwellwert-Moment M_{SW} erreicht.

Fig. 3 zeigt an, wie bei entsprechendem Zeitverlauf die vom Momenten-Regler abgegebene Sollposition ⊖ₛₒₗₗ als Regelsignal für den Positions-Regler verläuft. Schließlich zeigt Fig. 4, wie ab dem Zeitpunkt t₁, d.h. dem Überschreiten des vorgegebenen Schwellwert-Momentes M_{SW} die Sollposition ⊖ₛₒₗₗ in die geänderte Sollposition 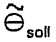 übergeht. Wird das Schwellwert-Moment M_{SW} erreicht, dann verändert sich die geänderte Sollposition 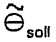 sprungartig auf eine dem Maxima P₁ zugeordneten Wert. Dadurch wird ein schnelles und sicheres Durchfahren des folgenden Minimums des Summenmomentes erreicht. Der erhöhte Wert der geänderten Sollposition 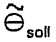 wird solange aufrecht erhalten, bis die Position P₂ erreicht wird. Dann wiederholt sich das sprunghafte Verändern der geänderten Sollposition 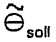 , bis schließlich eine dem vorgegebenen Sollwert Mₛₒₗₗ entsprechende Position P₁, P₂, P₃ oder P₄ erreicht und der Elektromotor stillgesetzt ist. Dabei ist zu erkennen, wie sich beim weiteren Anstieg des Summenmomentes auch die Maxima zunehmen und die sprunghaften Änderungen der Kennlinie nach Fig. 4 bestimmen.

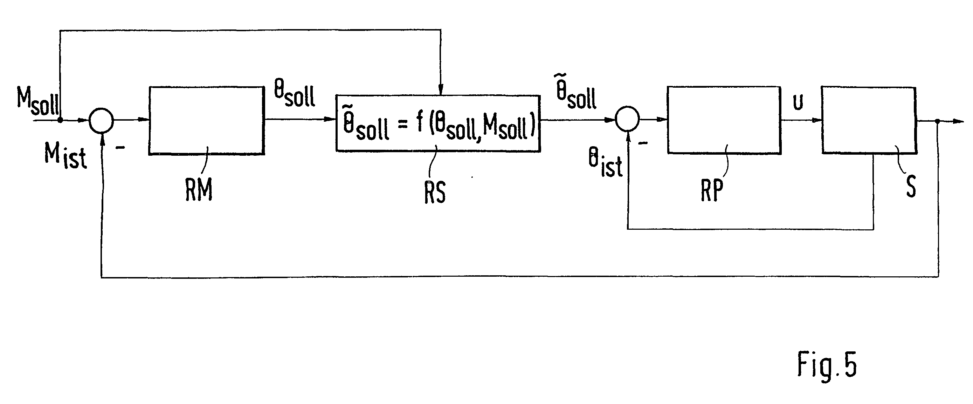

Der gesamte Regelkreis für den Elektromotor ist in Fig. 5 schematisch dargestellt. Der drehmomentabhängige Sollwert Mₛₒₗₗ wird zusammen mit dem drehmomentabhängigen Istwert M_{Ist} einem Momentenregler RM zugeführt, der als Regelsignal eine Sollposition ⊖ₛₒₗₗ als Regelsignal an eine nachfolgende Rechnerschaltung RS abgibt, das der in Fig. 3 gezeigten Kennlinie folgt. Der Sollwert Mₛₒₗₗ wird auch der Rechnerschaltung RS zugeführt, die unter Berücksichtigung des Schwettwert-Momentes M_{sw} die Kennlinie in eine geänderte Kennlinie für eine geänderte Sollposition 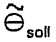 nach Fig. 4 überführt. Ein Vergleich der Kennlinien nach Fig. 3 und 4 zeigt, dass die Kennlinie der geänderten Sollposition 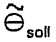 bis zum Erreichen des Schwellwert-Momentes M_{SW} zum Zeitpunkt t₁ unverändert gegenüber der Kennlinie der Sollposition ⊖ₛₒₗₗ nach Fig. 3 folgt. Danach wird aber die geänderte Sollposition ⊖ₛₒₗₗ sprungartig geändert, wobei die sprungartige Änderung von der Rechnerschaltung RS so vorgegeben wird, dass sie der Position des nachfolgenden, zunehmenden Maximums des Summenmomentes Mₛₛ entspricht. Dadurch wird sichergestellt, dass das zwischen den Maxima P₁ und P₂ auftretende Minimum schnell und sicher durchfahren wird. Wie die Kennlinie nach Fig. 4 zeigt, wiederholt sich diese sprungartige Änderung der geänderten Sollposition 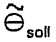 bei jedem Durchlauf eines Minimums bis schließlich der Elektro-motor in einer der Positionen P₁ bis P₄ beim Erreichen des Sollwertes Mₛₒₗₗ stillgesetzt wird.

## Patentansprüche

1. Stellantrieb mit einem mit positionsabhängigen Summenmoment arbeitenden elektronisch kommutierten Elektromotor, der mittels eines Momenten-Reglers und einer Regelstrecke nach einer sich kontinuierlich ansteigenden Moment-Zeit-Kennlinie auf einen vorgebbaren drehmomentabhängigen Sollwert einregelbar ist, wobei dem Momenten-Regler zur Ableitung eines Regelsignals neben dem Sollwert ein drehmomentabhängiger Istwert des Elektromotors zuführbar ist,
**dadurch** gekennzeichent,
dass der Momenten-Regler (RM) das Regelsignal als Sollposition (⊖ₛₒₗₗ) abgibt und einem nachgeordneten Positions-Regler (RP) zuführt,
dass bis zum Erreichen eines vorgegebenen Schwellwert-Momentes (M_{sw}), das kleiner als das Maximalmoment (M_{SS}) des Elektromotors ist, die Sollposition (⊖ₛₒₗₗ) dem Positions-Regler (RP) unverändert zuführbar und mit der Istposition (⊖ᵢₛₜ) des Elektromotors zur Ableitung des Regelsignals (u) für die Regelstrecke (S) verwendet ist, und
dass nach dem Überschreiten des Schwellwert-Momentes (M_{sw}) die Sollposition (⊖ₛₒₗₗ) dem Positions-Regier (RP) als geänderte Sollposition ( 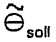 ) bis zum Erreichen der vorgegebenen Sollposition zuführbar ist, wobei sich die geänderte Sollposition ( 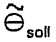 ) entsprechend dem Anstieg der nachfolgenden Spitzenwerte (P1 bis P4) des zunehmenden Summenmomentes (Mₛₛ) mehrmals sprungartig erhöht.

2. Stellantrieb nach Anspruch 1,
**dadurch gekennzeichnet,**
**dass** der Schwellwert-Moment (M_{sw}) etwa 70% des Maximalmomentes des Elektromotors entspricht.

3. Stellantrieb nach Anspruch 1 oder 2,
**dadurch gekennzeichnet,**
**dass** sich nach jeder sprungartigen Erhöhung der geänderten Sollposition ( 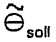 ) ihr Wert bis zum Erreichen der dem nachfolgenden Maximum des Summenmomentes (Mₛₛ) zugeordneten unveränderten Sollposition (⊖ₛₒₗₗ) konstant bleibt und sich dann wieder sprungartig ändert.

4. Stellantrieb nach einem der Ansprüche 1 bis 3,
**dadurch gekennzeichnet,**
**dass** die geänderte Sollposition ( 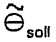 ) eine Funktion des Positionssignals (⊖ₛₒₗₗ) des Momenten-Reglers (RM), des vorgegebenen drehmomentenabhängigen Sollwertes (Mₛₒₗₗ) und des vorgegebenen Schwellwert-Momentes (M_{SW}) ist.

5. Stellantrieb nach einem der Ansprüche 1 bis 4,
**dadurch gekennzeichnet,**
**dass** zwischen den Momenten-Regler (RM) und den Positions-Regler (RP) eine Rechnerschaltung (RS) eingefügt ist, der das Regelsignal des Momenten-Reglers (RM) als Sollposition (⊖ₛₒₗₗ) und der Sollwert (Mₛₒₗₗ) zuführbar sind und
**dass** die Rechnerschaltung (RS) in Abhängigkeit von der Sollposition (⊖ₛₒₗₗ) und dem Sollwert (Mₛₒₗₗ) unter Berücksichtigung des Schvvellwert-Momentes (M_{sw}) die Sollposition (⊖ₛₒₗₗ) in die geänderte Sollposition ( 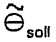 ) umrechnet und dem Positions-Regler (RP) zuführt.

## Claims

1. Actuating drive with an electronically commutated electric motor which operates with a position-dependent total torque, and can be regulated at a predefinable torque-dependent nominal value by means of a torque controller and a controlled system in accordance with a continuously increasing torque/time characteristic line, wherein, in addition to the nominal value, a torque-dependent actual value of the electric motor can be supplied to the torque controller in order to derive a control signal,
**characterized**
**in that** the torque controller (RM) outputs the control signal as a nominal position (θₙₒₘ) and supplies it to a downstream position controller (RP),
**in that** the nominal position (θₙₒₘ) can be supplied in unchanged form to the position controller (RP) and is used together with the actual position (θ_{act}) of the electric motor to derive the control signal (u) for the controlled system (S) until a predefined threshold value torque (M_{SW}) is reached which is lesser than the maximum torque (M_{SS}) of the electric motor, and
**in that**, after the threshold value torque (M_{SW}) is exceeded, the nominal position (θₙₒₘ) can be supplied to the position controller (RP) as a changed nominal position ( 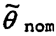 ) until the predefined nominal position is reached, the changed nominal position ( 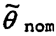 ) suddenly increasing at least twice in a manner corresponding to the rise in the following peak values (P1 to P4) of the increasing total torque (Mₛₛ).

2. Actuating drive according to Claim 1,
**characterized**
**in that** the threshold value torque (M_{sw}) corresponds to approximately 70% of the maximum torque of the electric motor.

3. Actuating drive according to Claim 1 or 2,
**characterized**
**in that**, after each sudden increase in the changed nominal position ( 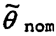 ), its value remains constant until the unchanged nominal position (θₙₒₘ) which is associated with the following maximum of the total torque (M_{SS}) is reached, and then suddenly changes again.

4. Actuating drive according to one of Claims 1 to 3,
**characterized**
**in that** the changed nominal position ( 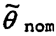 ) is a function of the position signal (θₙₒₘ) of the torque controller (RM), of the predefined torque-dependent nominal value (Mₙₒₘ), and of the predefined threshold torque (M_{SW}).

5. Actuating drive according to one of Claims 1 to 4,
**characterized**
**in that** a computer circuit (RS) is inserted between the torque controller (RM) and the position controller (RP), and can be supplied with the control signal of the torque controller (RM) as the nominal position (θₙₒₘ) and the nominal value (Mₙₒₘ), and
**in that**, as a function of the nominal position (θₙₒₘ) and the nominal value (Mₙₒₘ) and taking into account the threshold value torque (M_{SW}), the computer circuit (RS) converts the nominal position (θₙₒₘ) to the changed nominal position ( 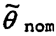 ) and supplies this to the position controller (RP).

## Revendications

1. Actionneur comportant un moteur électrique à commutation électronique fonctionnant à un couple global dépendant de la position, et régulé sur une valeur de consigne pouvant être prédéterminée et dépendant du couple de rotation au moyen d'un régulateur de couple et d'une boucle de régulation, conformément à une courbe caractéristique couple/temps croissant de manière continue, le régulateur de couple pouvant également recevoir, pour la formation d'un signal de régulation, outre la valeur de consigne, une valeur réelle dépendante du couple du moteur électrique,
**caractérisé en ce que**
le régulateur de couple (RM) émet le signal de régulation en tant que position de consigne (θₛₒₗₗ) et le transmet à un régulateur de position (RP) disposé en aval,
en dessous d'un couple de seuil prédéterminé (M_{sw}) inférieur au couple maximal (Mₛₛ) du moteur électrique, la position de consigne (θₛₒₗₗ) et transmise sans modification au régulateur de position (RP) et est utilisée, avec la position réelle (θᵢₛₜ) du moteur électrique, pour former le signal de régulation (u) destiné à la boucle de régulation (S), et
après dépassement du couple de seuil (M_{sw}), la position de consigne (θₛₒₗₗ) peut être transmise au régulateur de position (RP) en tant que position de consigne modifiée (θ'ₛₒₗₗ) jusqu'à ce que soit atteinte la position de consigne prédéterminée, la position de consigne modifiée (θ'ₛₒₗₗ) augmentant par à-coups à plusieurs reprises à mesure de l'augmentation des valeurs maximales successives (P1 à P4) du couple global croissant (Mss).

2. Actionneur selon la revendication 1,
**caractérisé en ce que**
le couple de seuil (M_{SW}) correspond à environ 70 % du couple maximal du moteur électrique.

3. Actionneur selon la revendication 1 ou 2,
**caractérisé en ce qu'**
après chaque augmentation par à-coups de la position de consigne modifiée (θ'ₛₒₗₗ), sa valeur reste constante jusqu'à ce que soit atteinte la position de consigne non modifiée (θₛₒₗₗ) associée au maximum suivant du couple global (Mₛₛ), puis se modifie à nouveau par à-coups.

4. Actionneur selon l'une des revendications 1 à 3,
**caractérisé en ce que**
la position de consigne modifiée (θ'ₛₒₗₗ) est une fonction du signal de position (θₛₒₗₗ) du régulateur de couple (RM), de la valeur de consigne prédéterminée dépendant du couple de rotation (Mₛₒₗₗ) et du couple de seuil prédéterminé (M_{sw}).

5. Actionneur selon l'une des revendications 1 à 4,
**caractérisé en ce qu'**
entre le régulateur de couple (RM) et le régulateur de position (RP) est inséré un circuit de calcul (RS) auquel peuvent être transmis le signal de régulation du régulateur de couple (RM) en tant que position de consigne (θₛₒₗₗ) et la valeur de consigne (Mₛₒₗₗ), et
le circuit de calcul (RS), en fonction de la position de consigne (θₛₒₗₗ) et de la valeur de consigne (Mₛₒₗₗ), et en prenant en compte le couple de seuil (M_{sw}), convertit la position de consigne (θₛₒₗₗ) en la position de consigne modifiée (θ'ₛₒₗₗ) et la transmet au régulateur de position (RP).
